# EUROPÄISCHE PATENTSCHRIFT

(11) **EP 3 381 723 B1**
(45) Veröffentlichungstag und Bekanntmachung des Hinweises auf die Patenterteilung: **06.07.2022**
(21) Anmeldenummer: 18161809.1
(22) Anmeldetag: 14.03.2018
(51) Int. Cl.: B60H 1/00, B60L 1/12, B60L 1/02

(54) **KRAFTFAHRZEUG MIT WÄRMESPEICHER UND VERFAHREN HIERZU**
MOTOR VEHICLE WITH HEAT ACCUMULATOR AND METHOD FOR SAME
VÉHICULE AUTOMOBILE POURVU D'ACCUMULATEUR DE CHALEUR ET PROCÉDÉ CORRESPONDANT

(30) Priorität: 25.03.2017 DE 102017002892
(43) Veröffentlichungstag der Anmeldung: 03.10.2018
(73) Patentinhaber: MAN Truck & Bus SE, 80995 München (DE)
(72) Erfinder: Hör, Marc, 82256 Fürstenfeldbruck (DE)
(74) Vertreter: v. Bezold & Partner Patentanwälte - PartG mbB

(56) Entgegenhaltungen:
- EP-A2- 1 609 638
- EP-A2- 2 230 110
- DE-A1- 19 720 897
- DE-C1- 19 912 139

## Beschreibung

Die Erfindung betrifft ein Kraftfahrzeug mit Wärmespeicher zum Speichern von Wärmeenergie und ein Verfahren zum Aufladen eines Wärmespeichers eines Kraftfahrzeugs.

Bei elektrisch betriebenen Fahrzeugen, zum Beispiel reinen Elektrofahrzeugen und Hybridfahrzeugen, kann es bei kalten Außentemperaturen durch das Heizen des Fahrzeuginnenraums zu einer deutlichen Reduzierung der (elektrischen) Reichweite kommen. Um dies zu verhindern, können Wärmespeicher vorgesehen sein.

Beispielsweise offenbart die DE 10 2009 058 103 A1 ein Elektrofahrzeug mit einem Energiespeicher zur Speicherung elektrischer Energie und einer Ladeeinrichtung, mittels der der Energiespeicher über ein externes Stromnetz aufladbar ist. Zudem ist ein Wärmespeicher vorgesehen, der zumindest teilweise aus einer elektrischen und/oder elektronischen Komponente besteht. Der Wärmespeicher wird aufgeheizt, wenn die Ladeeinrichtung mit einem externen Stromnetz verbunden ist.

Die EP 1 609 638 A2 offenbart ein Verfahren zum Betreiben einer Klimatisierungseinrichtung für Fahrzeuge. Ein Wärmespeicher kann während eines Betriebs einer Brennkraftmaschine des Fahrzeugs beladen werden. Im Stillstand und bei Unterbrechung des Betriebs der Brennkraftmaschine kann ein Fahrzeuginnenraum durch Wärme des Wärmespeichers erwärmt werden. Es ist möglich, dass ein Unterbrechen des Betriebs der Brennkraftmaschine unterdrückt wird, soweit nicht ein Mindestladezustand des Wärmespeichers vorliegt, der bspw. auch abhängig von einer Außentemperatur sein kann.

Die DE 197 20 897 A1 offenbart eine Einrichtung für die Beheizung eines Elektrofahrzeuges. Ein Wärmespeicher wird mittels einer Steuerung bis zu einem vollen Ladezustand geladen, der durch Erreichen einer vorbestimmten Temperatur im Wärmespeicher erkannt wird.

Die DE 199 12 139 C1 offenbart ein Verfahren und eine Vorrichtung zum Klimatisieren einer Fahrgastzelle eines Elektrofahrzeugs. Mittels einer Funktionstaste kann ein Ladevorgang eines Thermoenergiespeichers mit Wärme oder Kälte gestartet werden. Mittels eines Drehschalters kann die zu ladenden Wärmeform (Heizen oder Kühlen) eingestellt werden.

Die Aufladung des Wärmespeichers kann jedoch sehr energieintensiv und daher kostenintensiv sein.

Der Erfindung liegt somit die Aufgabe zu Grunde, ein verbessertes System mit Wärmespeicher und ein entsprechendes Verfahren bereitzustellen, das insbesondere weniger energieintensiv ist und/oder weitere Nachteile im Stand der Technik überwindet.

Die Aufgabe wird gelöst durch ein Kraftfahrzeug und ein Verfahren gemäß den unabhängigen Ansprüchen 1 und 11.

Vorteilhafte Weiterbildungen sind in den abhängigen Ansprüchen angegeben.

Bei dem Kraftfahrzeug handelt es sich insbesondere um ein Elektrokraftfahrzeug oder Hybridkraftfahrzeug und vorzugsweise um ein Nutzfahrzeug (zum Beispiel ein Elektronutzfahrzeug oder Hybridnutzfahrzeug). Das Kraftfahrzeug weist einen Wärmespeicher zur Speicherung von Wärmeenergie auf. Das Kraftfahrzeug weist zudem eine Steuereinheit auf. Die Steuereinheit ist dazu ausgebildet, einen gewünschten Ladegrad des Wärmespeichers in Abhängigkeit von (basierend auf) zumindest einem empfangenen Referenzparameter zu bestimmen und eine Aufladung des Wärmespeichers mit Wärmeenergie bis zum gewünschten Ladegrad zu steuern, umfassend ein System (38) zum Anlegen, Ändern und/ oder Verwalten eines Fahrzeugbenutzungsprofils, wobei in dem Fahrzeugbenutzungsprofil eine Anzahl, Dauer und/oder Länge von aufeinanderfolgenden Benutzungsphasen und/oder Nichtbenutzungsphasen des Kraftfahrzeugs (10) zwischen zwei aufeinanderfolgenden Aufladungen des Wärmespeichers (14) angegeben ist, wobei das System (38) das Fahrzeugbenutzungsprofil als einen Referenzparameter (R4) zu der Steuereinheit (24) ausgibt.

Dies hat den Vorteil, dass der Wärmespeicher nicht immer voll aufgeladen wird. Stattdessen wird ermöglicht, dass der Wärmespeicher nur teilweise aufgeladen wird. Insbesondere kann der Wärmespeicher mit genau der Wärmeenergie aufgeladen werden, die tatsächlich zum Erwärmen eines Fahrzeuginnenraums des Kraftfahrzeugs benötigt wird. So kann beispielsweise bei Aufladung des Wärmespeichers über ein externes Stromnetz elektrische Energie eingespart werden.

Das Kraftfahrzeug kann einen Energiespeicher zur Speicherung elektrischer Energie aufweisen, der separat von dem Wärmespeicher vorgesehen ist.

Die Steuereinheit kann den gewünschten Ladegrad insbesondere in Abhängigkeit von einer Mehrzahl von Referenzparametern bestimmen.

Das Kraftfahrzeug kann insbesondere ein Personenbeförderungsfahrzeug wie bspw. ein Omnibus sein.

Vorzugsweise kann das Kraftfahrzeug ferner eine elektrische Heizvorrichtung zum Aufladen des Wärmespeichers aufweisen. Die elektrische Heizvorrichtung ermöglicht die Aufladung des Wärmespeichers durch elektrische Energie, die beispielsweise durch ein externes Stromnetz eingespeist werden kann.

Vorteilhafterweise kann das Kraftfahrzeug zudem eine Wärmeisolierung zum Isolieren des Wärmespeichers aufweisen. Die Isolierung verhindert eine ungewünschte Wärmeabgabe durch den Wärmespeicher.

Die Wärmeisolierung kann den Wärmespeicher zumindest teilweise, vorzugsweise vollständig umgeben.

In einem Ausführungsbeispiel weist das Kraftfahrzeug ferner eine elektrische Ladeeinrichtung auf. Die elektrische Ladeeinrichtung ist mit einem externen Stromnetz verbindbar und mit der elektrischen Heizvorrichtung zum Versorgen mit elektrischer Energie verbunden.

Die Ladeeinrichtung kann insbesondere als ein Stecker oder eine Steckdose ausgebildet sein.

Die Ladeeinrichtung kann bereits vorhandene Komponenten des Elektrofahrzeuges oder Hybridfahrzeuges verwenden. Zum Beispiel können ein elektrischer Energiespeicher (Traktionsbatterie) und die elektrische Heizeinrichtung zum Laden des Wärmespeichers durch die gleiche Ladeeinrichtung mit einem externen Stromnetz verbunden werden. Ebenso können der elektrische Energiespeicher und die elektrische Heizeinrichtung zum Laden des Wärmespeichers bspw. mit dem gleichen Wechselrichter verbunden sein.

In einem weiteren Ausführungsbeispiel ist der Wärmespeicher zusätzlich durch Abwärme einer wärmeabgebenden Komponente des Kraftfahrzeugs, insbesondere eines Verbrennungsmotors des Kraftfahrzeugs, aufladbar. Die wärmeabgebende Komponente ist eine Komponente, die während des Betriebs des Kraftfahrzeugs Wärme erzeugt und abgibt. Dies hat den Vorteil, dass der Wärmespeicher zusätzlich durch anfallende Abwärme von Komponenten des Kraftfahrzeugs aufgeladen werden kann. Damit kann elektrische Energie zum Aufladen des Wärmespeichers eingespart werden.

Das Kraftfahrzeug mit Verbrennungsmotor kann insbesondere ein Hybridkraftfahrzeug mit einem Verbrennungsmotor und einem oder mehreren Elektromotoren sein.

In einer Ausführungsvariante weist das Kraftfahrzeug zudem einen Wärmetauscher auf. Der Wärmetauscher ist mit dem Wärmespeicher und einem Kühlkreislauf des Kraftfahrzeugs verbunden. Der Wärmespeicher kann insbesondere mit einem Kühlkreislauf eines Verbrennungsmotors und/oder einem Kühlkreislauf eines Elektromotors des Kraftfahrzeugs zum Aufladen des Wärmespeichers verbunden sein. Dies ermöglicht einerseits die Aufladung des Wärmespeichers ohne Verwendung von elektrischer Energie und andererseits die Kühlung des Kühlkreislaufes.

Zusätzlich oder alternativ kann der Wärmespeicher durch ein Rekuperieren eines als Bremswiderstand arbeitenden Elektromotors (Elektromotor im generatorischen Betrieb) aufladbar sein. Dazu kann bspw. die elektrische Heizeinrichtung des Wärmespeichers mit einem oder mehreren Elektromotoren verbunden sein.

In einer weiteren Ausführungsvariante weist das Kraftfahrzeug ferner einen Wärmetauscher zur Abgabe der im Wärmespeicher gespeicherten Wärmeenergie zum Erwärmen des Kraftfahrzeugs auf. Über den Wärmetauscher kann insbesondere ein Fahrzeuginnenraum des Kraftfahrzeugs und/oder ein elektrischer Energiespeicher des Kraftfahrzeugs erwärmt werden. Der Wärmetauscher ist vorzugsweise mit dem Wärmespeicher und einer Fahrzeuginnenraumheizung des Kraftfahrzeugs verbunden. Es ist auch möglich, dass der Wärmetauscher als Konvektor (Konvektionsheizung) zur Erwärmung eines Fahrzeuginnenraums des Kraftfahrzeugs ausgebildet ist. Folglich kann die im Wärmespeicher gespeicherte Wärmeenergie zum Vorwärmen oder Erwärmen des Fahrzeuginnenraums verwendet werden.

In einer Ausführungsform weist das Kraftfahrzeug zudem einen Temperatursensor auf. Der Temperatursensor gibt eine gemessene Temperatur als einen Referenzparameter zu der Steuereinheit aus. Die Steuereinheit kann dann (unter anderem) basierend auf der gemessenen Temperatur den gewünschten Ladegrad bestimmen.

In einer weiteren Ausführungsform ist der Temperatursensor ein im Kraftfahrzeug integrierter Außentemperatursensor (Umgebungstemperatursensor) und/oder ein mit dem Kraftfahrzeug verbindbarer, insbesondere kabellos verbindbarer, externer Außentemperatursensor (Umgebungstemperatursensor). Dies hat den Vorteil, dass kalte Bedingungen festgestellt und bei der Aufladung des Wärmespeichers berücksichtigt werden können. Je kälter die Bedingungen sind, umso höher kann der Wärmespeicher aufgeladen werden. Durch die Verwendung eines ohnehin vorhandenen internen Außentemperatursensors des Kraftfahrzeugs braucht kein zusätzlicher Temperatursensor vorgesehen zu werden. Die Verwendung eines externen Außentemperatursensors kann beispielsweise dann sinnvoll sein, wenn das Fahrzeug in einer Garage abgestellt wird und eine Umgebungstemperatur außerhalb der Garage ermittelt werden soll.

Der externe Außentemperatursensor kann beispielsweise über Funk, Bluetooth, Infrarot, NFC, WLAN oder Internet mit einer Netzwerkschnittstelle des Kraftfahrzeugs kommunizieren.

Vorteilhafterweise weist das Kraftfahrzeug zusätzlich eine Benutzerschnittstelle zur Eingabe eines Referenzparameters, der insbesondere einen gewünschten Ladegrad angibt, auf. Somit wird ermöglicht, dass der Benutzer basierend auf der oder den nächsten geplanten Fahrten eigenständig einen gewünschten Ladegrad angibt.

Der Referenzparameter kann sich insbesondere auf eine gewünschte Temperatur des Fahrzeuginnenraums für eine vorgegebene Fahrzeit und/oder Fahrtlänge beziehen. Damit wird ermöglicht, dass der Wärmespeicher nur so weit aufgeladen wird, wie zum Erzielen und Halten der gewünschten Temperatur während der Benutzung des Kraftfahrzeugs benötigt wird.

Vorzugsweise weist das Kraftfahrzeug zudem eine Netzwerksschnittstelle zum Empfangen einer Wetterprognose, insbesondere einer Außentemperaturprognose, auf. Die Netzwerkschnittstelle ist dazu ausgebildet, die empfangene Wetterprognose, insbesondere die empfangene Außentemperaturprognose, als einen Referenzparameter zu der Steuereinheit auszugeben. Dies hat den Vorteil, dass beispielsweise zukünftig steigende oder fallende Außentemperaturen bei der Aufladung des Wärmespeichers berücksichtigt werden können.

Das Kraftfahrzeug kann zusätzlich ein System zur Bestimmung eines Standorts des Kraftfahrzeugs, insbesondere ein GPS-System, aufweisen. Die Netzwerkschnittstelle kann eine Wetterprognose für einen von dem System bestimmten Standort empfangen.

Erfindungsgemäß weist das Kraftfahrzeug zudem ein System zum Anlegen, Ändern und/oder Verwalten eines Fahrzeugbenutzungsprofils auf. In einem Fahrzeugbenutzungsprofil wird eine Anzahl, Dauer und/oder Länge von aufeinanderfolgenden Benutzungsphasen und/oder Nichtbenutzungsphasen des Kraftfahrzeugs zwischen zwei aufeinanderfolgenden Aufladungen des Wärmespeichers (insbesondere durch die elektrische Heizeinrichtung) angegeben. Das System gibt das Fahrzeugbenutzungsprofil als einen Referenzparameter zu der Steuereinheit aus.

Dieses System ermöglicht, dass der Wärmespeicher mit genügend Wärmeenergie für mehrere Fahrten aufgeladen wird, wenn beispielsweise keine oder keine genügende Aufladung des Wärmespeichers während der Fahrten oder zwischen den Fahrten möglich ist.

In einem bevorzugten Ausführungsbeispiel bestimmt die Steuereinheit den gewünschten Ladegrad so, dass der Wärmespeicher mit genügend Wärmeenergie zum mehrmaligen Erwärmen des Kraftfahrzeugs, insbesondere eines Fahrzeuginnenraums des Kraftfahrzeugs, für die angegebene Anzahl, Dauer und/oder Länge an Benutzungsphasen aufgeladen wird. In einem besonders bevorzugten Ausführungsbeispiel ist das System zum Anlegen, Ändern und/oder Verwalten eines Fahrzeugbenutzungsprofils ein selbstlernendes System. Das selbstlernende System kann basierend auf aufgezeichneten Standortdaten, Zeiten des Betriebs und des Nichtbetriebs des Kraftfahrzeugs usw. automatisch ein Fahrzeugbenutzungsprofil erstellen oder aktualisieren. Der Fahrer des Kraftfahrzeugs kann somit ohne großen Aufwand auf ein Fahrzeugbenutzungsprofil zum Aufladen des Wärmespeichers zurückgreifen.

Alternativ oder zusätzlich kann das System eine manuelle Eingabe und/oder manuelle Änderung eines Fahrzeugbenutzungsprofils ermöglichen.

Die Erfindung betrifft ferner ein Verfahren zum Aufladen eines Wärmespeichers eines Kraftfahrzeugs, insbesondere eines Elektrokraftfahrzeug oder eines Hybridkraftfahrzeugs, vorzugsweise eines Nutzfahrzeugs (zum Beispiel ein Elektronutzfahrzeug oder Hybridnutzfahrzeug). Das Verfahren weist das Empfangen mindestens eines Referenzparameters und das Bestimmen eines gewünschten Ladegrads des Wärmespeichers in Abhängigkeit von (basierend auf) dem mindestens einen empfangenen Referenzparameter auf. Der Wärmespeicher wird bis zum gewünschten Ladegrad aufgeladen.

Analog dem hierin offenbarten Kraftfahrzeug mit Wärmespeicher ermöglicht das Verfahren eine Teilaufladung des Wärmespeichers, wodurch insbesondere elektrische Energie zum Aufladen des Wärmespeichers eingespart werden kann.

In einer Ausführungsform ist der Referenzparameter eine Außentemperatur bezüglich des Kraftfahrzeugs, eine Wetterprognose bezüglich eines Standorts des Kraftfahrzeugs, eine Benutzereingabe in eine Benutzerschnittstelle des Kraftfahrzeugs .

Das Verfahren kann insbesondere mehrere Referenzparameter verwenden und auf Grundlage der mehreren Referenzparameter einen gewünschten Ladegrad des Wärmespeichers bestimmen.

Erfindungsgemäß wird das Fahrzeugbenutzungsprofil zumindest teilweise automatisch und/oder manuell erstellt und gibt eine Anzahl, Dauer und/oder Länge von aufeinanderfolgenden Benutzungsphasen und/oder Nichtbenutzungsphasen des Kraftfahrzeugs zwischen zwei aufeinanderfolgenden Aufladungen des Wärmespeichers an.

Das Fahrzeugbenutzungsprofil kann bspw. auch selbstadaptierend sein, wobei bspw. ein vom Hersteller hinterlegtes Standardprofil (Referenzprofil) selbstadaptierend an die Benutzung des Fahrzeugs durch den jeweiligen Benutzer angepasst wird.

Vorteilhafterweise weist das Verfahren zusätzlich das Abgeben der im Wärmespeicher gespeicherten Wärmeenergie zum Erwärmen des Kraftfahrzeugs auf. Insbesondere kann ein Innenraum des Kraftfahrzeugs und/oder eine Komponente des Kraftfahrzeugs, vorzugsweise ein Verbrennungsmotor des Kraftfahrzeugs und/oder eine Traktionsbatterie (ein elektrischer Energiespeicher) des Kraftfahrzeugs, erwärmt werden.

Der Fahrzeuginnenraum kann durch die Wärmeenergie von dem Wärmespeicher vorgewärmt und während einer Fahrt bei einer gewünschten Temperatur gehalten werden. Ein Verbrennungsmotor kann beispielsweise vorgewärmt werden. Einer Traktionsbatterie kann bei kalten Außentemperaturen vorgewärmt und/oder bei einer gewünschten Temperatur während einer Fahrt gehalten werden.

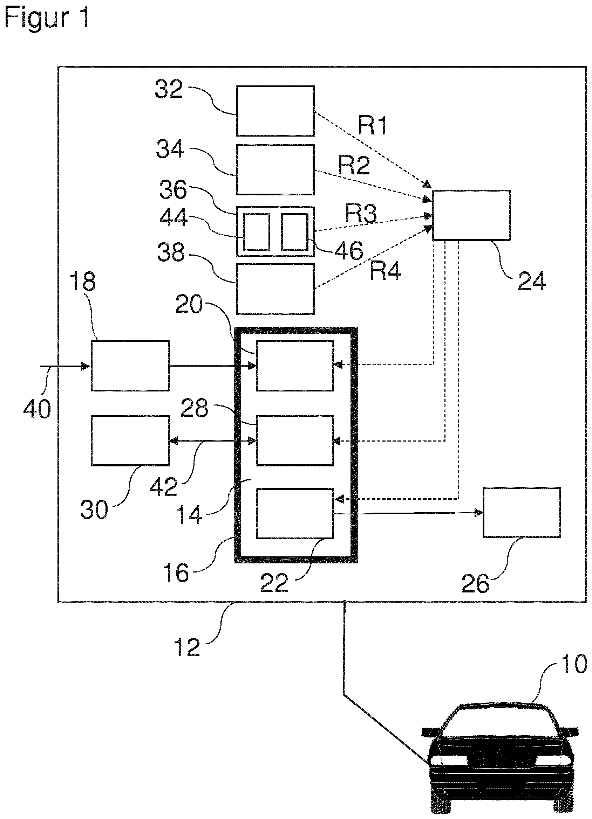

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben.

Die einzige Figur zeigt eine Schemaansicht eines Kraftfahrzeugs mit einer vergrößerten schematischen Darstellung eines Systems mit Wärmespeicher und mit dem Wärmespeicher zusammenarbeiten Komponenten.

Die Figur zeigt ein Kraftfahrzeug 10. Das Kraftfahrzeug 10 ist insbesondere als ein Elektrofahrzeug oder ein Hybridfahrzeug ausgebildet. Das Kraftfahrzeug 10 weist einen nicht näher dargestellten Energiespeicher zum Speichern von elektrischer Energie auf. Die im elektrischen Energiespeicher gespeicherte elektrische Energie kann zum Antreiben eines nicht näher dargestellten Elektromotors verwendet werden. Der Elektromotor kann das Kraftfahrzeug 10 antreiben.

Das Kraftfahrzeug 10 weist eine Vorrichtung 12 mit einem Wärmespeicher 14 und mehreren, mit dem Wärmespeicher 14 zusammenarbeitenden Komponenten auf.

Die Vorrichtung 12 weist den Wärmespeicher 14, eine Isolierung 16, eine Ladeeinrichtung 18, eine elektrische Heizeinrichtung 20, einen ersten Wärmetauscher 22 und eine Steuereinheit 24 auf. Die Vorrichtung 12 kann ferner insbesondere eine Fahrzeuginnenraumheizung 26, einen zweiten Wärmetauscher 28, einen Verbrennungsmotor 30 und eine oder mehrere, mit der Steuereinheit 24 verbundene Komponenten oder Systeme 32 - 38 aufweisen.

Der Wärmespeicher 14 ist zum Speichern von Wärme ausgebildet. Der Wärmespeicher 14 ist ferner dazu ausgebildet, mit unterschiedlichen Ladegraden aufgeladen zu werden. Mit anderen Worten gesagt, kann der Wärmespeicher 14 beispielsweise nur teilweise geladen werden.

Der Wärmespeicher 14 kann beispielsweise als ein Latentwärmespeicher, ein sensibler Wärmespeicher, ein thermochemisches Wärmespeicher, ein Sorptionsspeicher oder ein Fluidtank zum Speichern eines Fluides, z. B. Wasser, ausgebildet sein.

Zur Vermeidung einer ungewünschten Wärmeabfuhr aus dem Wärmespeicher 14 kann eine Isolierung 16 vorgesehen sein. Die Isolierung 16 kann den Wärmespeicher 14 teilweise oder vollständig umfassen. Dadurch wird ermöglicht, dass die Wärme im Wärmespeicher 14 auch während längerer Phasen des Stillstands des Kraftfahrzeugs 10 nicht ungewünscht an die Umgebung abgegeben wird.

Zum Aufladen des Wärmespeichers 14 weist die Vorrichtung 12 die Ladeeinrichtung 18 und die elektrische Heizeinrichtung 20 auf. Die Ladeeinrichtung 18 ist mit der elektrischen Heizeinrichtung 20 verbunden. Die Ladeeinrichtung 18 kann beispielsweise als eine Steckdose oder ein Stecker am Kraftfahrzeug 10 ausgebildet sein. Die Ladeeinrichtung 18 kann mit einem externen Stromnetz 40 verbunden werden. Dies ermöglicht, dass elektrische Energie von dem externen Stromnetz 40 über die Ladeeinrichtung 18 zu der elektrischen Heizeinrichtung 20 geleitet wird.

Die elektrische Heizeinrichtung 20 kann auch mit einem Elektromotor (nicht dargestellt) des Kraftfahrzeugs 10 verbunden sein, um beim Rekuperieren des Elektromotors (Bremsen des Kraftfahrzeugs durch den Elektromotor) den Wärmespeicher 14 aufzuladen. Die elektrische Heizeinrichtung 20 wandelt die elektrische Energie in Wärmeenergie zum Aufladen des Wärmespeichers 14 mit Wärmeenergie um. Die elektrische Heizeinrichtung 20 kann auch mit elektrischer Energie aus einem elektrischen Energiespeicher (nicht dargestellt) des Kraftfahrzeugs 10 versorgt werden. Die Ladeeinrichtung 18 kann auch zum Laden eines elektrischen Energiespeichers (nicht dargestellt) verwendet werden, sodass bei einem Hybrid- oder Elektrofahrzeug bereits vorhandene Komponenten zum Aufladen des Wärmespeichers 14 verwendet werden können.

Der erste Wärmeübertrager 22 dient zum Entladen des Wärmespeichers 14, d. h. zur Abgabe der im Wärmespeicher 14 gespeicherten Wärmeenergie. Der erste Wärmeübertrager 22 kann die Wärme zu einem Fahrzeuginnenraum (Fahrerraum, Fahrgastzelle) des Kraftfahrzeugs 10 abgeben. Beispielsweise kann der erste Wärmeübertrager 22 mit einem Wärmeübertrager einer Heizeinrichtung 26 für den Fahrzeuginnenraum zur Übertragung von Wärme verbunden sein. Zusätzlich oder alternativ kann der erste Wärmeübertrager 22 die Wärme auch zu anderen Komponenten des Kraftfahrzeugs 10 abgeben, die eine Vorwärmung oder Erwärmung zum richtigen Betrieb bei niedrigen Außentemperaturen benötigen können. Eine derartige Komponente kann beispielsweise eine Traktionsbatterie (ein elektrischer Energiespeicher) des Kraftfahrzeugs 10 sein.

In einigen Ausführungsformen kann der Wärmespeicher die gespeicherte Wärme auch direkt zu Konvektoren übertragen, die den Fahrzeuginnenraum erwärmen können. Zum Beispiel kann der Wärmespeicher als Wasserspeicher ausgebildet sein, der das erwärmte Wasser gesteuert zu Konvektoren (z. B. Heizkörpern) leiten kann, die dann den Fahrzeuginnenraum erwärmen. Eine derartige Lösung kann insbesondere bei Nutzfahrzeugen wie Omnibussen bevorzugt angewendet werden. Mit anderen Worten gesagt, der erste Wärmeübertrager 22 kann eine oder mehrere Konvektoren (Konvektionsheizungen) aufweisen.

In einigen Ausführungsformen kann das Kraftfahrzeug 10 einen Verbrennungsmotor 30 aufweisen. Die Abwärme des Verbrennungsmotors 30 kann zum Aufladen des Wärmespeichers 14 verwendet werden. Zum Beispiel kann ein zweiter Wärmeübertrager 28 vorgesehen sein, der mit einem Kühlkreislauf 42 des Verbrennungsmotors 30 verbunden ist. Während des Betriebs des Kraftfahrzeugs 10 kann der Wärmespeicher 14 durch eine Wärmeübertragung von einem erwärmten Kühlmittel im Kühlkreislauf 42 aufgeladen werden. Ebenso ist es denkbar, dass insbesondere bei niedrigen Außentemperaturen der Verbrennungsmotor 30 für den Betrieb von dem Wärmespeicher 14 aufgewärmt wird. Dazu überträgt der Wärmespeicher 14 über den zweiten Wärmeübertrager 28 Wärme auf das Kühlmittel im Kühlkreislauf 42. Das Kühlmittel im Kühlkreislauf 42 wärmt den Verbrennungsmotor 30 vor.

Gleichermaßen kann der Wärmespeicher 14 in einigen Ausführungsformen durch die Abwärme eines Elektromotors (nicht dargestellt) des Kraftfahrzeugs 10 aufgeladen werden. Zum Beispiel kann der zweite Wärmeübertrager 28 zusätzlich oder alternativ mit einem Kühlkreislauf des Elektromotors verbunden sein. Insbesondere wenn der Elektromotor als Bremswiderstand wirkt, kann dieser viel Abwärme produzieren.

Die Aufladung und Entladung des Wärmespeichers 14 wird von der Steuereinheit 24 gesteuert. Im Einzelnen steht die Steuereinheit 24 in Kommunikationsverbindung mit der elektrischen Heizeinrichtung 20 zum Steuern einer Aufladung des Wärmespeichers 14. Die Steuereinheit 24 kann ferner in Kommunikationsverbindung mit dem ersten Wärmetauscher 22 zur gesteuerten Wärmeabgabe an den Fahrzeuginnenraum stehen. In einigen Ausführungsformen kann die Steuereinheit 24 zusätzlich in Kombinationsverbindung mit dem zweiten Wärmeübertrager 28 zum Aufladen oder Entladen des Wärmespeichers 14 stehen.

Die Steuereinheit 24 ist dazu ausgebildet, einen gewünschten Ladegrad des Wärmespeichers 14 zu bestimmen. Der gewünschte Ladegrad kann jeglicher Ladegrad zwischen einem vollständig ungeladenen Wärmespeicher 14 und einem vollständig geladen Wärmespeicher 14 sein. Mit anderen Worten gesagt, der Ladegrad kann zwischen 0 % und 100 % betragen. Die Steuereinheit 24 kann insbesondere die elektrische Heizeinrichtung 20 so ansteuern, dass der Wärmespeicher 14 nur bis zum gewünschten Ladegrad mit Wärmeenergie aufgeladen wird. Dies ermöglicht insbesondere eine Teilladung des Wärmespeichers 14.

Die Steuereinheit 24 bestimmt den gewünschten Ladegrad basierend auf einem oder einer Mehrzahl von Referenzparametern R1 - R4. Die Steuereinheit 24 empfängt die Referenzparameter R1 - R4 von den Komponenten oder Systemen 32 - 38. Basierend auf den Referenzparametern R1 - R4 kann die Steuereinheit 24 beispielsweise anhand von Nachschlagtabellen den gewünschten Ladegrad bestimmen. Als Eingangsgrößen können die Referenzparameter R1 - R4 zum Bestimmen des gewünschten Ladegrads als Ausgangsgröße verwendet werden. Die Steuereinheit 24 kann die Referenzparameter R1 - R4 beispielsweise auch unter Anwendung verschiedener Berechnungsalgorithmen auswerten und den gewünschten Ladegrad bestimmen.

Es versteht sich, dass nur eines, mehrere oder alle Komponenten oder Systeme 32-38 zum Ausgeben der entsprechenden Referenzparameter R1-R4 vorhanden sein können. Zusätzlich oder alternativ können andere Systeme oder Komponenten vorhanden sein, die einen Referenzparameter an die Steuereinheit 24 ausgeben, auf dessen Basis die Steuereinheit 24 den gewünschten Ladegrad bestimmt. Beispielsweise können Temperaturen von durch den Wärmespeicher 14 zu erwärmenden oder vorzuwärmenden Komponenten (z. B. eine Traktionsbatterie) als ein oder mehrere weitere Referenzparameter von der Steuereinheit 24 empfangen werden.

In einigen Ausführungsformen kann ein Temperatursensor 32 vorgesehen sein. Der Temperatursensor 32 ist insbesondere ein Außentemperatursensor, der zum Messen einer Außentemperatur des Kraftfahrzeugs 10 angeordnet ist. Der Temperatursensor 32 kann, wie dargestellt, in das Kraftfahrzeug 10 integriert sein. Alternativ kann der Temperatursensor 32 ein externer Temperatursensor sein, der zum Messen einer Temperatur am Standort des Temperatursensors 32 ausgebildet ist. Dies ermöglicht beispielsweise, dass eine Temperatur außerhalb einer Garage, in der das Kraftfahrzeug 10 steht, gemessen wird. Es ist ebenso möglich, dass mehrere Temperatursensoren, zum Beispiel ein integrierter Außentemperatursensor des Kraftfahrzeugs 10 und ein externer Außentemperatursensor, verwendet werden.

Der Temperatursensor 32 steht in Kommunikationsverbindung mit der Steuereinheit 24. Der Temperatursensor 32 gibt die gemessene Temperatur als einen ersten Referenzparameter R1 aus. Im Allgemeinen wird die Steuereinheit 24 den gewünschten Ladegrad desto höher bestimmen, umso niedriger die gemessene Temperatur des Temperatursensors 32 ist. Mit anderen Worten gesagt, wird mit abfallende Außentemperatur mehr Wärmeenergie im Wärmespeicher 14 gespeichert.

In einigen Ausführungsformen kann eine Benutzerschnittstelle 34 vorgesehen sein. Die Benutzerschnittstelle 34 steht in Kommunikationsverbindung mit der Steuereinheit 24. Die Benutzerschnittstelle 34 kann beispielsweise ein Touchscreen oder eine Tastatur sein. Über die Benutzerschnittstelle 34 kann ein Benutzer, zum Beispiel der Fahrer des Kraftfahrzeugs 10, eine Benutzereingabe R2 vornehmen, die sich auf einen gewünschten Ladegrad des Wärmespeichers 14 bezieht. Der Benutzer kann folglich selbst bestimmen, wie stark der Wärmespeicher 14 aufgeladen wird.

Es ist ebenso denkbar, dass ein System 36 zur Wetterprognose vorgesehen ist. Das System 36 kann beispielsweise eine Vorrichtung 44 zur Standortbestimmung und eine Netzwerkschnittstelle 46 aufweisen.

Die Vorrichtung 44 zur Standortbestimmung kann zum Beispiel eine GPS-Vorrichtung sein. Die Vorrichtung 44 ist dazu ausgebildet, einen Standort des Kraftfahrzeugs 10 zu bestimmen.

Basierend auf dem bestimmten Standort des Kraftfahrzeugs 10 kann das System 36 über die Netzwerkschnittstelle 46 eine Wetterprognose für den Standort des Kraftfahrzeugs 10 empfangen. Die Netzwerkschnittstelle 46 kann die Wetterprognose beispielsweise von einer Wetterstation oder über das Internet empfangen. Die Wetterprognose kann sich insbesondere auf eine Außentemperaturprognose bezüglich des Standorts das Kraftfahrzeugs 10 beziehen. Die Wetterprognose kann zu der Steuereinheit 24 als ein dritter Referenzparameter R3 geleitet werden.

Typischerweise wird die Steuereinheit 24 für kältere Wetterprognosen (Außentemperaturprognosen) einen höheren Ladegrad für den Wärmespeicher 14 bestimmen. Insbesondere Regionen, in denen große Temperaturunterschiede im täglichen Verlauf auftreten können, können so besser berücksichtigt werden.

Erfindungsgemäß ist ein System 38 zum Anlegen, Ändern und/oder Verwalten eines Fahrzeugbenutzungsprofils vorhanden.

In einem Fahrzeugbenutzungsprofil wird zumindest implizit eine Anzahl, Dauer und/oder Länge von aufeinanderfolgenden Benutzungsphasen das Kraftfahrzeugs 10 zwischen zwei aufeinanderfolgenden (Teil-) Aufladungen des Wärmespeichers 14 angegeben. Das System 38 gibt das Fahrzeugbenutzungsprofil als einen Referenzparameter R4 zu der Steuereinheit 24 aus.

In einem Fahrzeugbenutzungsprofil kann beispielsweise das typische Fahrprofil des Kraftfahrzeugs 10 ermittelt werden. So kann beispielsweise für ein Fahrzeug, das oft einige Kurzstrecken mit dazwischenliegenden Auskühlphasen des Innenraums fährt, ein größerer gewünschter Ladegrad bestimmt und somit eine größere Wärmemenge bevorratet werden. Ebenso ist es möglich, dass für eine typische Fahrzeugbenutzung Heim - Arbeitsstätte (zum Beispiel Büro) - Heim ohne Lademöglichkeit bei der Arbeitsstätte noch genügend Wärme für die Rückfahrt von der Arbeitsstätte nach Hause zur Verfügung steht.

Das System 38 kann ein selbstlernendes System sein, das das Fahrzeugbenutzungsprofil automatisch oder zumindest teilweise automatisch beispielsweise auf Grundlage von aufgezeichneten Standortdaten und Zeiten ermittelt. Zusätzlich oder alternativ kann das System 38 eine Benutzereingabe ermöglichen. Die Benutzereingabe kann sich auf das Anlegen eines neuen Fahrzeugbenutzungsprofils und/oder auf das Verändern eines bereits angelegten Fahrzeugbenutzungsprofils, das manuell oder automatisch angelegt wurde, beziehen.

Die Steuereinheit 24 ist insbesondere dazu ausgebildet, einen gewünschten Ladegrad basierend auf einer Mehrzahl von empfangenen Referenzparameter R1 - R4 zu bestimmen. Beispielsweise kann die Steuereinheit 24 eine Außentemperatur R1 von dem Temperatursensor 32 empfangen. Die Außentemperatur R1 beträgt beispielsweise 0°C. Zusätzlich kann die Steuereinheit 24 ein Fahrzeugbenutzungsprofil R4 von dem System 38 empfangen. Das Fahrzeugnutzungsprofil R4 gibt beispielsweise zwei aufeinanderfolgende Phasen der Benutzung des Kraftfahrzeugs 10 an. Basierend auf der empfangenen Außentemperatur R1 und dem Fahrzeugbenutzungsprofil R4 kann die Steuereinheit 24 den gewünschten Ladegrad bestimmen. Gemäß dem gewünschten Ladegrad wird der Wärmespeicher 14 so weit aufgeladen, dass eine zweimalige Aufwärmung des Fahrzeuginnenraums auf beispielsweise 20°C und ein Halten der Temperatur während der Benutzungsphasen ermöglicht wird.

Die Auswertung eines oder mehrerer Referenzparameter R1 - R4 ermöglicht die Ermittlung einer minimal notwendigen Wärmeenergie. Das hat den Vorteil, dass die Reichweite des Kraftfahrzeugs 10 bei kalten Bedingungen nicht (signifikant) verringert wird, aber ein möglichst hoher Komfort gewährleistet werden kann. Zusätzlich hilft die Vorrichtung 12, (elektrische) Energie zu sparen, da der Wärmespeicher 14 nicht immer vollständig geladen werden muss.

Die Wärmeenergie kann von dem Wärmespeicher 14 beispielsweise zu einer voreingestellten automatisch ermittelten Uhrzeit abgegeben werden. Die Steuereinheit 24 kann beispielsweise den Wärmeübertrager 22 entsprechend ansteuern. So kann das Kraftfahrzeug 10 bereits vorgewärmt sein, wenn der Fahrer in das Kraftfahrzeug 10 einsteigt.

Auch wenn hierin insbesondere die besonders bevorzugte Anwendung der Vorrichtung 12 bei einem Hybrid- oder Elektrofahrzeug beschrieben ist, kann die Vorrichtung 12 prinzipiell bei allen Kraftfahrzeugen mit Wärmespeicher und insbesondere bei allen Kraftfahrzeugen mit elektrisch aufladbarem Wärmespeicher verwendet werden.

Fachleute werden erkennen, dass die hierin offenbarte Vorrichtung 12 auf einem innovativen Verfahren zum Aufladen eines Wärmespeichers eines Kraftfahrzeugs basiert. Das Verfahren kann die Vorrichtung 12 verwenden.

Das Verfahren weist das Empfangen mindestens eines Referenzparameters R1 - R4 beispielsweise von den Temperatursensor 32, der Benutzerschnittstelle 34, dem System 36 oder dem System 38 auf. Basierend auf dem oder den empfangenen Referenzparametern R1 - R4 wird ein gewünschter Ladegrad des Wärmespeichers 14 beispielsweise von der Steuereinheit 24 bestimmt. Anschließend wird der Wärmespeicher 14 bis zum gewünschten Ladegrad aufgeladen. Die Aufladung kann von der Steuereinheit 24 gesteuert werden.

Wie hierin im Detail offenbart ist, kann der Referenzparameter eine Außentemperatur R1 bezüglich des Kraftfahrzeugs 10 und/oder eine Wetterprognose R3 bezüglich eines Standorts des Kraftfahrzeugs 10 sein. Zusätzlich oder alternativ kann der Referenzparameter eine Benutzereingabe R2 in eine Benutzerschnittstelle 34 des Kraftfahrzeugs 10 und/oder ein Fahrzeugbenutzungsprofil R4 bezüglich des Kraftfahrzeugs 10 sein.

Das Verfahren kann zudem das Abgeben der im Wärmespeicher 14 gespeicherten Wärmeenergie zum Erwärmen des Kraftfahrzeugs 10 aufweisen. Insbesondere kann ein Innenraum des Kraftfahrzeugs 10 von der Innenraumheizung 26 vor und/oder während einer Benutzung des Kraftfahrzeugs 10 erwärmt werden. Ebenso kann eine Komponente des Kraftfahrzeugs 10, die eine Vorwärmung bei kalten Außenbedingungen benötigt, vorgewärmt werden. Dies kann zum Beispiel auf einen Verbrennungsmotor 30 und/oder eine Traktionsbatterie (einen elektrischen Energiespeicher) zutreffen.

Die Erfindung ist nicht auf die vorstehend beschriebenen bevorzugten Ausführungsbeispiele beschränkt. Vielmehr ist eine Vielzahl von Varianten und Abwandlungen im Rahmen der Patentansprüche möglich.

### Bezugszeichenliste

- 10: Kraftfahrzeug
- 12: Vorrichtung
- 14: Wärmespeicher
- 16: Isolierung
- 18: Ladeeinrichtung (Stecker, Steckdose)
- 20: Elektrische Heizeinrichtung
- 22: Wärmetauscher
- 24: Steuereinheit
- 26: Fahrzeuginnenraumheizung
- 28: Wärmetauscher
- 30: Verbrennungsmotor
- 32: Temperatursensor
- 34: Benutzerschnittstelle
- 36: System zur Erfassung von Wetterprognosen
- 38: System für Fahrzeugbenutzungsprofile
- 40: Externes Stromnetz
- 42: Kühlkreislauf
- 44: Vorrichtung zur Standortbestimmung
- 46: Netzwerkschnittstelle
- R1 - R4: Referenzparameter

## Patentansprüche

1. Kraftfahrzeug (10), insbesondere Elektrokraftfahrzeug oder Hybridkraftfahrzeug, vorzugsweise Nutzfahrzeug, aufweisend:
einen Wärmespeicher (14) zur Speicherung von Wärmeenergie; und
eine Steuereinheit (24), die dazu ausgebildet ist, einen gewünschten Ladegrad des Wärmespeichers (14) in Abhängigkeit von zumindest einem empfangenen Referenzparameter (R1, R2, R3, R4) zu bestimmen und eine Aufladung des Wärmespeichers (14) mit Wärmeenergie bis zum gewünschten Ladegrad zu steuern,
**gekennzeichnet durch:**
ein System (38) zum Anlegen, Ändern und/oder Verwalten eines Fahrzeugbenutzungsprofils, wobei in dem Fahrzeugbenutzungsprofil eine Anzahl, Dauer und/oder Länge von aufeinanderfolgenden Benutzungsphasen und/oder Nichtbenutzungsphasen des Kraftfahrzeugs (10) zwischen zwei aufeinanderfolgenden Aufladungen des Wärmespeichers (14) angegeben ist, wobei das System (38) das Fahrzeugbenutzungsprofil als einen Referenzparameter (R4) zu der Steuereinheit (24) ausgibt.

2. Kraftfahrzeug (10) nach Anspruch 1, ferner aufweisend:
eine elektrische Heizvorrichtung (20) zum Aufladen des Wärmespeichers (14); und/oder
eine Wärmeisolierung (16) zum Isolieren des Wärmespeichers (14).

3. Kraftfahrzeug (10) nach Anspruch 2, ferner aufweisend eine elektrische Ladeeinrichtung (18), die mit einem externen Stromnetz (40) verbindbar und mit der elektrischen Heizvorrichtung (20) zum Versorgen mit elektrischer Energie verbunden ist.

4. Kraftfahrzeug (10) nach einem der vorherigen Ansprüche, wobei:
der Wärmespeicher (14) zusätzlich durch Abwärme einer wärmeabgebenden Komponente des Kraftfahrzeugs (10), insbesondere eines Verbrennungsmotor (30) des Kraftfahrzeugs (10), aufladbar ist; und/oder
das Kraftfahrzeug (10) ferner einen Wärmetauscher (28) aufweist, der mit dem Wärmespeicher (14) und einem Kühlkreislauf (42) des Kraftfahrzeugs (10), insbesondere einem Kühlkreislauf eines Verbrennungsmotors (30) des Kraftfahrzeugs (10) und/oder einem Kühlkreislauf eines Elektromotors des Kraftfahrzeugs (10), zum Aufladen des Wärmespeichers (14) verbunden ist; und/oder
der Wärmespeicher (14) zusätzlich durch ein Rekuperieren eines als Bremswiderstand arbeitenden Elektromotors aufladbar ist.

5. Kraftfahrzeug (10) nach einem der vorherigen Ansprüche, ferner aufweisend einen Wärmetauscher (22) zur Abgabe der im Wärmespeicher (14) gespeicherten Wärmeenergie zum Erwärmen des Kraftfahrzeugs (10), insbesondere eines Fahrzeuginnenraums des Kraftfahrzeugs (10) und/oder eines elektrischen Energiespeichers des Kraftfahrzeugs (10), wobei der Wärmetauscher (22) vorzugsweise mit dem Wärmespeicher (14) und einer Fahrzeuginnenraumheizung (26) des Kraftfahrzeugs (10) verbunden ist oder der Wärmetauscher (22) vorzugsweise als Konvektor zur Erwärmung eines Fahrzeuginnenraums des Kraftfahrzeugs (10) ausgebildet ist.

6. Kraftfahrzeug (10) nach einem der vorherigen Ansprüche, ferner aufweisend einen Temperatursensor (32), der eine gemessene Temperatur als einen Referenzparameter (R1) zu der Steuereinheit (24) ausgibt.

7. Kraftfahrzeug (10) nach Anspruch 6, wobei der Temperatursensor (32) ein im Kraftfahrzeug (10) integrierter Außentemperatursensor ist und/oder ein mit dem Kraftfahrzeug (10) verbindbarer, insbesondere kabellos verbindbarer, externer Außentemperatursensor ist.

8. Kraftfahrzeug (10) nach einem der vorherigen Ansprüche, ferner aufweisend eine Benutzerschnittstelle (34) zur Eingabe eines Referenzparameters (R2), der insbesondere einen gewünschten Ladegrad angibt.

9. Kraftfahrzeug (10) nach einem der vorherigen Ansprüche, ferner aufweisend eine Netzwerksschnittstelle (46) zum Empfangen einer Wetterprognose, insbesondere einer Außentemperaturprognose, wobei die Netzwerkschnittstelle (46) dazu ausgebildet ist, die empfangene Wetterprognose, insbesondere die empfangene Außentemperaturprognose, als einen Referenzparameter (R3) zu der Steuereinheit (24) auszugeben.

10. Kraftfahrzeug (10) nach einem der vorherigen Ansprüche, wobei:
die Steuereinheit (24) den gewünschten Ladegrad so bestimmt, dass der Wärmespeicher (14) mit genügend Wärmeenergie zum mehrmaligen Erwärmen des Kraftfahrzeugs (10), insbesondere eines Fahrzeuginnenraums des Kraftfahrzeugs (10), für die angegebene Anzahl, Dauer und/oder Länge an Benutzungsphasen aufgeladen wird; und/oder
das System (38) zum Anlegen, Ändern und/oder Verwalten eines Fahrzeugbenutzungsprofils ein selbstlernendes System ist und/oder eine manuelle Eingabe und/oder manuelle Änderung eines Fahrzeugbenutzungsprofils ermöglicht.

11. Verfahren zum Aufladen eines Wärmespeichers (14) eines Kraftfahrzeugs (10) nach Anspruch 1, insbesondere eines Elektrokraftfahrzeug oder eines Hybridkraftfahrzeugs, vorzugsweise eines Nutzfahrzeugs, aufweisend:
Empfangen mindestens eines Referenzparameters (R1, R2, R3, R4) aufweisend ein Fahrzeugbenutzungsprofil bezüglich des Kraftfahrzeugs (10), wobei das Fahrzeugbenutzungsprofil zumindest teilweise automatisch und/oder manuell erstellt wird und eine Anzahl, Dauer und/oder Länge von aufeinanderfolgenden Benutzungsphasen und/oder Nichtbenutzungsphasen des Kraftfahrzeugs (10) zwischen zwei aufeinanderfolgenden Aufladungen des Wärmespeichers (14) angibt;
Bestimmen eines gewünschten Ladegrads des Wärmespeichers (14) in Abhängigkeit von dem mindestens einen empfangenen Referenzparameter (R1, R2, R3, R4); und
Aufladen des Wärmespeichers (14) bis zum gewünschten Ladegrad.

12. Verfahren nach Anspruch 11, wobei der mindestens eine Referenzparameter (R1, R2, R3, R4) ferner eine Außentemperatur bezüglich des Kraftfahrzeugs (10), eine Wetterprognose bezüglich eines Standorts des Kraftfahrzeugs (10) und/oder eine Benutzereingabe in eine Benutzerschnittstelle (34) des Kraftfahrzeugs (10) aufweist.

13. Verfahren nach Anspruch 11 oder Anspruch 12, ferner aufweisend:
Abgeben der im Wärmespeicher (14) gespeicherten Wärmeenergie zum Erwärmen des Kraftfahrzeugs (10), insbesondere eines Fahrzeuginnenraums des Kraftfahrzeugs (10) und/oder einer Komponente des Kraftfahrzeugs (10), vorzugsweise eines Verbrennungsmotors (30) des Kraftfahrzeugs (10) und/oder einer Traktionsbatterie des Kraftfahrzeugs (10).

## Claims

1. A motor vehicle (10), in particular electric motor vehicle or hybrid motor vehicle, preferably utility vehicle, having:
a heat store (14) for storing thermal energy; and
a control unit (24) which is designed to determine a desired charge level of the heat store (14) depending on at least one received reference parameter (R1, R2, R3, R4) and to control charging of the heat store (14) with thermal energy up to the desired charge level,
**characterized by**:
a system (38) for applying, modifying and/or managing a vehicle use profile, wherein a number, duration and/or length of successive use phases and/or non-use phases of the motor vehicle (10) between two successive charging operations of the heat store (14) is specified in the vehicle use profile, wherein the system (38) outputs the vehicle use profile to the control unit (24) as a reference parameter (R4).

2. The motor vehicle (10) according to Claim 1, further having:
an electrical heating apparatus (20) for charging the heat store (14); and/or
a thermal insulation (16) for insulating the heat store (14).

3. The motor vehicle (10) according to Claim 2, further having an electrical charging device (18) which can be connected to an external power supply system (40) and is connected to the electrical heating apparatus (20) for supplying it with electrical energy.

4. The motor vehicle (10) according to one of the preceding claims, wherein:
the heat store (14) can additionally be charged using waste heat from a heat-emitting component of the motor vehicle (10), in particular an internal combustion engine (30) of the motor vehicle (10); and/or
the motor vehicle (10) further has a heat exchanger (28) which is connected to the heat store (14) and a cooling circuit (42) of the motor vehicle (10), in particular a cooling circuit of an internal combustion engine (30) of the motor vehicle (10) and/or a cooling circuit of an electric motor of the motor vehicle (10), for charging the heat store (14); and/or
the heat store (14) can additionally be charged by recuperating an electric motor operating as a braking resistor.

5. The motor vehicle (10) according to one of the preceding claims, further having a heat exchanger (22) for emitting the thermal energy stored in the heat store (14) for heating the motor vehicle (10), in particular a vehicle interior of the motor vehicle (10) and/or an electrical energy store of the motor vehicle (10), wherein the heat exchanger (22) is preferably connected to the heat store (14) and a vehicle interior heater (26) of the motor vehicle (10) or the heat exchanger (22) is preferably designed as a convector heating a vehicle interior of the motor vehicle (10).

6. The motor vehicle (10) according to one of the preceding claims, further having a temperature sensor (32) which outputs a measured temperature to the control unit (24) as a reference parameter (R1).

7. The motor vehicle (10) according to Claim 6, wherein the temperature sensor (32) is an outside temperature sensor integrated in the motor vehicle (10) and/or an external outside temperature sensor which can be connected, in particular can be wirelessly connected, to the motor vehicle (10).

8. The motor vehicle (10) according to one of the preceding claims, further having a user interface (34) for inputting a reference parameter (R2) which specifies, in particular, a desired charge level.

9. The motor vehicle (10) according to one of the preceding claims, further having a network interface (46) for receiving a weather forecast, in particular an outside temperature forecast, wherein the network interface (46) is designed to output the received weather forecast, in particular the received outside temperature forecast, to the control unit (24) as a reference parameter (R3).

10. The motor vehicle (10) according to one of the preceding claims, wherein:
the control unit (24) determines the desired charge level such that the heat store (14) is charged with enough thermal energy for heating the motor vehicle (10), in particular a vehicle interior of the motor vehicle (10), several times for the specified number, duration and/or length of use phases; and/or
the system (38) for applying, modifying and/or managing a vehicle use profile is a self-learning system and/or allows manual input and/or manual modification of a vehicle use profile.

11. A method for charging a heat store (14) of a motor vehicle (10) according to Claim 1, in particular an electric motor vehicle or a hybrid motor vehicle, preferably a utility vehicle, comprising:
receiving at least one reference parameter (R1, R2, R3, R4) comprising a vehicle use profile relating to the motor vehicle (10), wherein the vehicle use profile is at least partially automatically and/or manually created and specifies a number, duration and/or length of successive use phases and/or non-use phases of the motor vehicle (10) between two successive charging operations of the heat store (14);
determining a desired charge level of the heat store (14) depending on the at least one received reference parameter (R1, R2, R3, R4); and
charging the heat store (14) up to the desired charging level.

12. The method according to Claim 11, wherein the at least one reference parameter (R1, R2, R3, R4) further comprises an outside temperature relating to the motor vehicle (10), a weather forecast relating to a location of the motor vehicle (10) and/or a user input into a user interface (34) of the motor vehicle (10).

13. The method according to Claim 11 or Claim 12, further comprising:
emitting the thermal energy stored in the heat store (14) for heating the motor vehicle (10), in particular a vehicle interior of the motor vehicle (10) and/or a component of the motor vehicle (10), preferably an internal combustion engine (30) of the motor vehicle (10) and/or a traction battery of the motor vehicle (10).

## Revendications

1. Véhicule automobile (10), notamment véhicule automobile électrique ou véhicule automobile hybride, de préférence véhicule utilitaire, comprenant :
un accumulateur de chaleur (14) destiné à accumuler de l'énergie thermique ; et
une unité de commande (24), qui est configurée pour déterminer un degré de charge souhaité de l'accumulateur de chaleur (14) en fonction d'au moins un paramètre de référence (R1, R2, R3, R4) reçu et pour commander une charge de l'accumulateur de chaleur (14) avec de l'énergie thermique jusqu'au degré de charge souhaité,
**caractérisé par** :
un système (38) destiné à créer, modifier et/ou gérer un profil d'utilisation de véhicule, un nombre, une durée et/ou une longueur de phases d'utilisation et/ou de phases de non-utilisation successives du véhicule automobile (10) entre deux charges successives de l'accumulateur de chaleur (14) étant indiqués dans le profil d'utilisation de véhicule, le système (38) délivrant le profil d'utilisation de véhicule à l'unité de commande (24) sous la forme d'un paramètre de référence (R4).

2. Véhicule automobile (10) selon la revendication 1, comprenant en outre :
un arrangement de chauffage électrique (20) destiné à charger l'accumulateur de chaleur (14) ; et/ou
une isolation thermique (16) destinée à isoler l'accumulateur de chaleur (14).

3. Véhicule automobile (10) selon la revendication 2, comprenant en outre un dispositif de charge électrique (18), qui peut être relié à un réseau électrique externe (40) et qui est relié à l'arrangement de chauffage électrique (20) pour l'alimentation en énergie électrique.

4. Véhicule automobile (10) selon l'une des revendications précédentes, avec lequel :
l'accumulateur de chaleur (14) peut en plus être chargé par la chaleur perdue d'un composant dissipant de la chaleur du véhicule automobile (10), notamment d'un moteur à combustion interne (30) du véhicule automobile (10) ; et/ou
le véhicule automobile (10) possède en outre un échangeur de chaleur (28), lequel est relié à l'accumulateur de chaleur (14) et à un circuit de refroidissement (42) du véhicule automobile (10), notamment un circuit de refroidissement d'un moteur à combustion interne (30) du véhicule automobile (10) et/ou un circuit de refroidissement d'un moteur électrique du véhicule automobile (10), pour le chargement de l'accumulateur de chaleur (14) ; et/ou
l'accumulateur de chaleur (14) peut en plus être chargé par une récupération d'un moteur électrique fonctionnant en tant que résistance de freinage.

5. Véhicule automobile (10) selon l'une des revendications précédentes, comprenant en outre un échangeur de chaleur (22) destiné à dissiper l'énergie thermique accumulée dans l'accumulateur de chaleur (14) pour chauffer le véhicule automobile (10), notamment un habitacle du véhicule automobile (10) et/ou un accumulateur d'énergie électrique du véhicule automobile (10), l'échangeur de chaleur (22) étant de préférence relié à l'accumulateur de chaleur (14) et à un chauffage d'habitacle (26) du véhicule automobile (10) ou l'échangeur de chaleur (22) étant de préférence réalisé sous la forme d'un convecteur pour le chauffage d'un habitacle du véhicule automobile (10).

6. Véhicule automobile (10) selon l'une des revendications précédentes, comprenant en outre une sonde de température (32) qui délivre une température mesurée à l'unité de commande (24) sous la forme d'un paramètre de référence (R1).

7. Véhicule automobile (10) selon la revendication 6, la sonde de température (32) étant une sonde de température extérieure intégrée dans le véhicule automobile (10) et/ou une sonde de température extérieure connectable, notamment connectable sans fil au véhicule automobile (10).

8. Véhicule automobile (10) selon l'une des revendications précédentes, comprenant en outre une interface utilisateur (34) destinée à la saisie d'un paramètre de référence (R2), qui indique notamment un degré de charge souhaité.

9. Véhicule automobile (10) selon l'une des revendications précédentes, comprenant en outre une interface de réseau (46) destinée à recevoir une prévision météorologique, notamment une prévision de température extérieure, l'interface de réseau (46) étant configurée pour délivrer la prévision météorologique reçue, notamment la prévision de température extérieure reçue, à l'unité de commande (24) sous la forme d'un paramètre de référence (R3).

10. Véhicule automobile (10) selon l'une des revendications précédentes, avec lequel :
l'unité de commande (24) détermine le degré de charge souhaité de telle sorte que l'accumulateur de chaleur (14) est chargé avec suffisamment d'énergie thermique pour chauffer plusieurs fois le véhicule automobile (10), notamment un habitacle du véhicule automobile (10), pour le nombre, la durée et/ou la longueur des phases d'utilisation ; et/ou
le système (38) destiné à créer, modifier et/ou gérer un profil d'utilisation de véhicule est un système à autoapprentissage et/ou permet une saisie manuelle et/ou une modification manuelle d'un profil d'utilisation de véhicule.

11. Procédé pour charger un accumulateur de chaleur (14) d'un véhicule automobile (10) selon la revendication 1, notamment d'un véhicule automobile électrique ou d'un véhicule automobile hybride, de préférence d'un véhicule utilitaire, comprenant :
la réception d'au moins un paramètre de référence (R1, R2, R3, R4) qui présente un profil d'utilisation de véhicule relatif au véhicule automobile (10), le profil d'utilisation de véhicule étant créé au moins partiellement automatiquement et/ou manuellement et indiquant un nombre, une durée et/ou une longueur de phases d'utilisation et/ou de phases de non-utilisation successives du véhicule automobile (10) entre deux charges successives de l'accumulateur de chaleur (14) ;
la détermination d'un degré de charge souhaité de l'accumulateur de chaleur (14) en fonction de l'au moins un paramètre de référence (R1, R2, R3, R4) reçu ; et
la charge de l'accumulateur de chaleur (14) jusqu'au degré de charge souhaité.

12. Procédé selon la revendication 11, l'au moins un paramètre de référence (R1, R2, R3, R4) présentant en outre une température extérieure par rapport au véhicule automobile (10), une prévision météorologique en référence à un lieu du véhicule automobile (10) et/ou une saisie d'utilisateur dans une interface utilisateur (34) du véhicule automobile (10).

13. Procédé selon la revendication 11 ou 12, comprenant :
la dissipation de l'énergie thermique accumulée dans l'accumulateur de chaleur (14) pour chauffer le véhicule automobile (10), notamment un habitacle du véhicule automobile (10) et/ou un composant du véhicule automobile (10), de préférence un moteur à combustion interne (30) du véhicule automobile (10) et/ou une batterie de traction du véhicule automobile (10).
